# EUROPÄISCHE PATENTANMELDUNG

(11) **EP 2 489 326 A2**
(43) Veröffentlichungstag der Anmeldung: **22.08.2012**
(21) Anmeldenummer: 12000878.4
(22) Anmeldetag: 10.02.2012
(51) Int. Cl.: A61C 8/00, A61C 13/265

(54) **Verbindungsanordnung zwischen einer Zahnprothese und einem Implantatpfosten**

(30) Priorität: 18.02.2011 DE 102011011583; 18.05.2011 DE 102011101927; 26.08.2011 DE 102011111320
(71) Anmelder: BoneCare Biomechanics d.o.o., 71000 Sarajevo (BA)
(72) Erfinder: Laux, Thomas, Dr., 86356 Steppach-Neusäß (DE)
(74) Vertreter: Gallo, Wolfgang

(57) **Zusammenfassung**

Verbindungsanordnung zwischen einer Zahnprothesen-Krone (2) und dem Kopf (1) eines Implantatpfostens, wobei in einem zwischen der Krone (2) und dem Implantatpfostenkopf (1) gebildeten Zwischenraum ein metallenes Zwischenelement (3) aus einem hinreichend federelastischen Metall angeordnet ist, das einerseits mit der Innenwandfläche der Krone (2) formschlüssig zusammenwirkt und andererseits mit einem Rastelement (17) des Implantatpfostenkopfs (1) elastisch rastbar zusammenwirkt, wobei dieses rastbare Zusammenwirken in einem oberen Bereich der Krone (2) stattfindet.

## Beschreibung

Die Erfindung betrifft eine Verbindungsanordnung zwischen einer Zahnprothese und einem Implantatpfosten.

Solche Verbindungsanordnungen sind notwendig, um Zahnprothesen, die Vollprothesen oder Teilprothesen sein können, auf im Kieferknochen verankerten Implantatpfosten abnehmbar fixieren zu können.

Verschiedene Vorschläge solcher Verbindungsanordnungen sind bekannt.

Sie beziehen sich auf die Kopfausbildung der Implantatpfosten einerseits und auf die Ausbildung von Kronen andererseits, die auf die Implantatpfostenköpfe aufsetzbar sind und Bestandteil der Zahnprothese bilden.

Aus der US 2010/0 159 420 A1 ist eine solche Verbindungsanordnung bekannt, bei welcher der Kopf des Implantatpfostens eine Umfangsnut aufweist. Die Krone hat eine kugelig gewölbte Innenumfangsfläche, die mit der ebenfalls kugelig gewölbten Außenumfangsfläche eines elastischen, aber aus hartem Material bestehenden Halterings zusammenwirkt, der seinerseits mit seiner Innenumfangsfläche einen Elastomerring teilweise umgreift, der seinerseits in die Umfangsnut des Implantatpfostenkopfs eingreift. Der Elastomerring ermöglicht im Zusammenwirken mit der Umfangsnut des Implantatpfostenkopfs eine elastische Schnappverbindung, die ein rastendes Aufsetzen der Krone auf den Implantatpfosten und in gleicher Weise ein Lösen der Krone vom Implantatpfosten ermöglicht.

Bei dieser bekannten Anordnung ist es schwierig, den Haltering in die Krone einzusetzen, denn der größte Außendurchmesser der kugelig gewölbten Außenoberfläche des Halterrings ist größer als der untere Öffnungsdurchmesser der ebenfalls kugelig gewölbten Innenumfangsfläche der Krone. Der Haltering muss daher, wenn er aus Metall besteht, geschlitzt sein, oder, wenn er aus steifem Kunststoff besteht, entsprechend verformt werden. Noch schwieriger ist allerdings das Herausnehmen des Halterings aus der Krone, wenn ein Austausch erforderlich sein sollte. Denn der Elastomerring hat sicher nur eine begrenzte Lebensdauer, so dass mit der Notwendigkeit eines Austauschs nach verhältnismäßig kurzer Zeit gerechnet werden muss.

Aus der US 6 981 871 B2 ist eine Verbindungsanordnung bekannt, bei welcher der Kopf des Implantatpfostens einen oberen Abschnitt mit einem ersten Durchmesser und einen darunter liegenden Abschnitt mit einem zweiten, etwas größeren Durchmesser hat, wobei diese beiden Abschnitte jeweils eine etwa ballige Außenfläche haben und durch eine Ringnut axial voneinander getrennt sind. Die Krone hat eine kugelig gewölbte Innenumfangsfläche. In diese aus Metall, wie beispielsweise rostfreiem Stahl, bestehende Krone ist eine Rastkappe aus elastischem Material, wie beispielsweise Nylon, eingesetzt, die ebenfalls eine kugelig gewölbte Außenumfangsfläche hat und an ihrem Innenumfang mit im Axialschnitt konkaven Flächenbereichen ausgebildet ist, die axial beabstandet sind, und von denen der obere Flächenbereich die ballige Umfangsfläche des obersten Abschnitts des Implantatpfostenkopfs umgreift und der untere Flächenbereich die ballige Umfangsfläche des folgenden, im Außendurchmesser etwas größeren Abschnitts des Implantatpfostenkopfs umgreift. Die elastische Rastkappe bewirkt also an zwei axial beabstandeten Stellen des Implantatpfostens eine elastische Rastverbindung mit dessen beiden axial aufeinander folgenden Abschnitten.

Auch bei dieser bekannten Anordnung ist eine nur begrenzte Lebensdauer der aus elastischem und damit relativ weichem Material bestehenden Rastkappe zu erwarten, die dementsprechend gelegentlich erneuert werden muss.

Aus der US 2010/0055 645 ist eine weitere Verbindungsanordnung bekannt, die das aus der eben erörterten US 6 981 871 B2 bekannte Prinzip der doppelten Verrastung einer in die Krone eingesetzten Rastkappe aus elastischem Material auf dem Implantatpfostenkopf in einer anderen Gestalt verwirklicht. Dort hat der Implantatpfosten einen Kopf mit einer balligen Außenumfangsfläche, die von einer im Axialschnitt konkaven Innenumfangsfläche einer Schürze der Rastkappe umgriffen wird, und der Implantatpfosten hat außerdem eine axiale zentrische und hinterschnittene Öffnung, in welche ein knaufartig geformter axialer mittiger Ansatz der Rastkappe eingreift. Hier erfolgt also eine doppelte Rastung einerseits durch elastisches Verrasten dieses knaufartigen Ansatzes der Rastkappe in der Öffnung des Implantatpfostenkopfs und andererseits durch Rasten der äußeren Schürze der Rastkappe über die ballige Außenumfangsfläche des Implantatpfostenkopfs.

Auch hier ist die in die metallene Krone eingesetzte Rastkappe aus elastischem Material wie beispielsweise Nylon hergestellt und damit in ihrer zu erwartenden Lebensdauer begrenzt.

Alle oben erörterten bekannten Vorschlägen bekannter Verbindungsanordnungen zwischen einem Implantatpfosten und einer Krone sind Ausführungsformen eines gemeinsamen Grundprinzips, bei dem ein in die aus Metall bestehende Krone eingesetztes, elastisch verformbares Rastelement aus elastomerischem oder elastischem Kunststoffmaterial vorgesehen ist, das aufgrund seiner elastischen Verformbarkeit mit der Kontur des wiederum aus hartem Metall bestehenden Implantatpfostenkopfs zusammen wirkt, um die Zahnprothese rastbar und damit lösbar auf den im Kieferknochen (oder auch in nicht mehr vitalen Zahnwurzeln) verankerten Implantatpfosten zu fixieren. Daher sind alle diese bekannten Ausführungsformen mit dem Problem behaftet, dass das elastomerische oder nicht metallische elastische Rastelement ein Verschleißteil darstellt, das eine relativ begrenzte Lebensdauer hat und nach einer gewissen Gebrauchsdauer ausgetauscht werden muss.

Der Erfindung liegt daher die Aufgabe zugrunde, eine verbesserte Verbindungsanordnung zwischen einer Krone als Verbindungsteil einer Zahnprothese und einem Implantatpfosten zu schaffen.

Diese Aufgabe wird gemäß der Erfindung dadurch gelöst, daß zwischen dem Kopf des Implantatpfostens und der Krone ein metallenes Zwischenelement vorgesehen ist, das in der Krone fixierbar ist und elastisch rastbar mit dem Kopf des Implantatpfostens zusammenwirkt, wobei der Rasteingriff zwischen dem Zwischenelement und dem Implantatpfostenkopf in einem oberen Bereich der Krone stattfindet.

Der Kopf des Implantatpfostens kann ein auf dem eigentlichen Implantatpfosten montiertes Bauteil sein, insbesondere in Gestalt einer auf den Implantatpfosten aufschraubbaren oder anderweitig fixierten Pfostenkappe, die an ihrer Außenfläche mit entsprechenden Schlüsselflächen zum Ansetzen eines Werkzeugs zum Aufmontieren versehen sein kann. Eine solche Pfostenkappe kann auch als auf den eigentlichen Implantatpfosten aufgesetzte Primärkrone bezeichnet werden, die in der in der europäischen Patentschrift EP 2 015 700 beschriebenen Weise unter Einbau einer Druckfeder auf dem Implantatpfostenkopf angeordnet sein kann und zusammen mit dem Implantatpfostenkopf einen Stoßdämpfer bildet. Das vorstehend als Krone bezeichnete Verbindungsteil einer Zahnprothese ist dann als Sekundärkrone auf diese Primärkrone aufsetzbar.

Mehrere Lösungsvarianten dieses erfindungsgemäßen Prinzips sind Gegenstand der unabhängigen Patentansprüche.

Nach dem unabhängigen Anspruch 1 ist das Zwischenelement als Hülse ausgebildet, die einen unteren, im wesentlichen zylindrischen Abschnitt hat, der mit einem Außengewinde versehen und in ein entsprechendes Innengewinde der Krone einschraubbar ist, und mit einem oberen, vorzugsweise einwärts vorspringenden Abschnitt, der durch einen axialen Schlitz zu einem umfangsmäßigen Segment geformt ist oder durch mit Umfangsabständen angeordnete Axialschlitze in einzelne umfangsmäßige Segmente unterteilt ist, wobei das umfangsmäßige Segment oder die umfangsmäßigen Segmente mit Rastelementen versehen sind, die mit einem am Implantatpfostenkopf gebildeten Rastgegenelement zusammenwirken. Die Rastelemente der Segmente sind vorzugsweise Rastvorsprünge, die in eine am Kopf des Implantatpfostens angeordnete Ringnut einrastbar sind, aber die Anordnung ist auch umkehrbar, dergestalt, dass am Implantatpfostenkopf Rastvorsprünge angeordnet sind, die in Rastmulden der Segmente einrastbar sind.

Vorzugsweise sind mehrere, am Umfang des Zwischenelements verteilte Segmente vorgesehen. Grundsätzlich genügt aber auch ein einziges Segment, das durch Schlitzen des oberen Abschnitts durch einen gegebenenfalls breiten Axialschlitz geformt wird, und das dann, anders als ein geschlossener Ring, ebenso wie mehrere getrennte Segmente radial elastische Auslenkbarkeit hat.

Nach dem unabhängigen Anspruch 2 ist das Zwischenelement als Hülse ausgebildet, die einen unteren Abschnitt hat, der im wesentlichen zylindrisch sein kann und durch einen Axialschlitz zu einem umfangsmäßig verlaufenden Segment geformt ist oder durch mehrere mit Umfangsabständen angeordnete Axialschlitze in eine Mehrzahl von einzelnen umfangsmäßigen Segmenten unterteilt ist, wobei das Segment oder die Segmente jeweils an ihrer Außenseite mit einem Rastelement versehen sind, das mit einem entsprechenden Rastgegenelement an der Innenfläche der Krone einrastbar ist, und einen oberen, vorzugsweise einwärts konisch vorspringenden Abschnitt aufweist, der wiederum durch einen Axialschlitz zu einem umfangsmäßig verlaufenden Segment geformt ist oder durch mehrere mit Umfangsabständen angeordnete Axialschlitze in mehrere einzelne umfangsmäßige Segmente unterteilt ist, wobei das Segment oder die Segmente jeweils an der Innenfläche ein Rastelement aufweisen, die mit einem entsprechenden Rastgegenelement des Implantatpfostens verrastbar sind. Vorzugsweise sind die Rastelemente wiederum Rastvorsprünge, die in eine Umfangsnut an der Innenfläche der Krone bzw. des Implantatpfostens einrastbar sind.

Nach dem unabhängigen Anspruch 3 ist das Zwischenelement in Gestalt einer axial geschlitzten Ringfeder ausgebildet. Diese hat radial äußere Bereiche, die mit einer komplementären Formation an der Innenwand der Krone in Eingriff stehen, und radial innere Bereiche, die mit einer komplementären Formation am

Implantatpfosten in Eingriff stehen, wobei mindestens einer dieser beiden Eingriffe, vorzugsweise mit dem Implantatpfosten, rastbar ist. Die Ringfeder kann eine radial gewellte Form haben, um die genannten radial inneren und radial äußeren Bereiche durch radial innen und radial außen liegende Wellenbereiche zu bilden, oder die Ringfeder kann einen kreisringförmigen Grundkörper haben, an dem die radial inneren und radial äußeren Bereiche durch von dem Grundkörper radial einwärts bzw. radial auswärts vorspringende Bereiche gebildet sind. Auch Mischformen sind möglich. Der Ringquerschnitt der Ringfeder braucht nicht kreisrund und auch nicht gerundet zu sein, er kann vielmehr auch reckteckig sein, wenn die Rastbarkeit durch entsprechend abgeschrägte Rampenflächen am Gegenelement ermöglicht wird.

In allen Fällen bringt die Erfindung den Vorteil, daß auf elastomerische Bauteile, die besonderem Verschleiß unterworfen sind, verzichtet werden kann und dadurch eine dauerhaftere, präziser wirkende Verbindungsanordnung geschaffen, um eine Zahnprothese mit Implantatpfosten lösbar zu verbinden.

Das Zwischenelement besteht in jedem Fall, wie oben ausgeführt, aus Metall. In besonderer Weiterbildung der Erfindung kann das Zwischenelement aus Nickel-Titan hergestellt sein. Ein solches Nickel-Titan-Material ist unter der Handelsbezeichnung "NiTinol" bekannt und zeichnet sich unter anderem durch die Eigenschaft aus, dass es ein "Formgedächtnis" hat. Sollte das Zwischenelement im Laufe der Zeit aufgrund der ständigen Wechselbelastung durch Kauvorgänge einer allmählichen Verformung unterliegen und dadurch die Straffheit der Verrastung zwischen Implantatpfostenkopf und Krone zu stark nachlassen, kann durch Wärmeeinwirkung, beispielsweise mit Hilfe von heißem Wasser, ein solches aus einer derartigen Nickel-Titan-Komposition bestehendes Zwischenelement in seine Ausgangsform zurück gebracht werden.

Ausführungsbeispiele der Erfindung werden nachstehend unter Bezugnahme auf die anliegenden Zeichnungen mehr im einzelnen beschrieben.

In den Zeichnungen zeigt:
- Fig. 1: eine erste Ausführungsform der Erfindung in auseinandergezogener Darstellung im Axialschnitt
- Fig. 2: die Ausführungsform nach Fig. 1 im zusammengesetzten Zustand im Axialschnitt,
- Fig. 3: eine zweite Ausführungsform der Erfindung in auseinandergezogener Darstellung im Axialschnitt,
- Fig. 4: die Ausführungsform nach Fig. 3 im zusammengesetzten Zustand im Axialschnitt,
- Fig. 5: eine dritte Ausführungsform nach der Erfindung in auseinandergezogenem Zustand, wobei die Krone und die Pfostenkappe im Axialschnitt dargestellt sind und die Ringfeder in Draufsicht dargestellt ist, und
- Fig. 6: die Ausführungsform nach Fig. 5 in zusammengesetzten Zustand im Axialschnitt.

Die Zeichnungen aller Ausführungsbeispiele zeigen jeweils eine Pfostenkappe 1 (nachstehend als "Primärkrone" bezeichnet), die den Kopf eines im übrigen nicht dargestellten Implantatpfostens bildet, eine Krone 2 (nachstehend als "Sekundärkrone" bezeichnet) und ein eine rastbare Verbindung zwischen diesen beiden Komponenten ermöglichendes Zwischenelement 3.

Die Ausbildung des Implantatpfostens im übrigen ist nicht Bestandteil der Erfmdung und wird deshalb hier nicht näher beschrieben. Auch die Ausbildung des Implantatpfostenkopfs als auf den eigentlichen Implantatpfosten aufgesetzte Primärkrone, wie in den Ausführungsbeispielen dargestellt, oder als integraler Bestandteil des übrigen Implantatpfostens, sowie die Verbindung zwischen der Primärkrone und dem übrigen Implantatpfosten einschließlich der Ausbildung einer vorzugsweise vorhandenen Stoßdämpfereinrichtung zwischen der Primärkrone und dem Implantatpfosten sind für die vorliegende Erfindung ohne Bedeutung und werden nicht in näheren Einzelheiten beschrieben.

Die Sekundärkrone ist in an sich bekannter Weise Bestandteil einer Zahnprothese, die als Vollprothese oder Teilprothese ausgebildet sein kann, und die Verbindung der Sekundärkrone mit der Zahnprothese und die Ausbildung der Au-βenflächen der Sekundärkrone zur Verbindung mit der übrigen Zahnprothese sind nicht Bestandteile der Erfindung.

Die erfindungsgemäße Verbindungsanordnung umfasst vielmehr allein das jeweilige Zwischenelement 3 der verschiedenen Ausführungsformen sowie die damit zusammenwirkenden Gegenelemente der Primärkrone 1 (bzw. eines anders, nämlich beispielsweise einstückig mit dem übrigen Implantatpfosten ausgebildeten Implantatpfostenkopfs) und der Sekundärkrone.

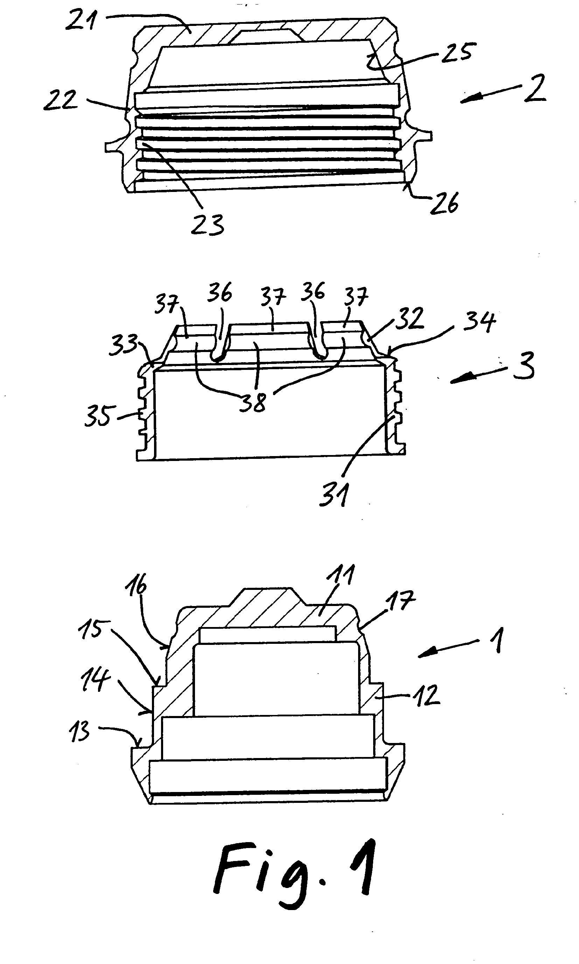

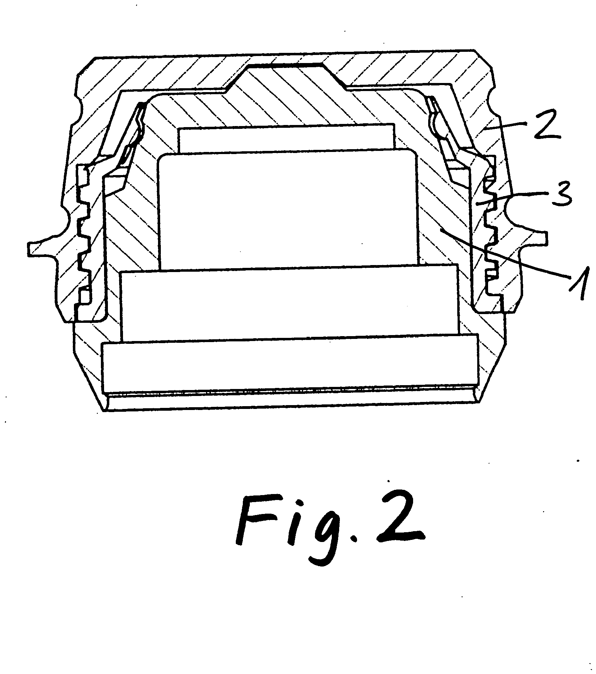

Eine erste, besonders bevorzugte Ausführungsform der erfindungsgemäßen Verbindungsanordnung ist in den Figuren 1 und 2 dargestellt, wobei Figur 1 die Komponenten Primärkrone 1, Sekundärkrone 2 und Zwischenelement 3 in auseinandergezogener Darstellung jeweils im Axialschnitt, und Figur 2 die zusammengesetzte Anordnung im Axialschnitt zeigt.

Das Zwischenelement 3 hat einen unteren, im wesentlichen zylindrischen Abschnitt 31 und einen sich daran oben anschließenden oberen Abschnitt 32, der einwärts konisch verläuft und im wesentlichen eine kegelstumpfförmige Gestalt hat, wobei am Übergang zwischen dem unteren Abschnitt 31 und dem oberen Abschnitt 32 ein einwärts springender Absatz 33 mit einer außenseitigen, axial nach oben weisenden Schulterfläche 34 gebildet ist.

Der etwa zylindrische untere Abschnitt 31 des Zwischenelements 3 ist an seinem Außenumfang mit einem Schraubgewinde 35 ausgebildet. Die Sekundärkrone 2 hat eine Deckwand 21 und einen sich daran anschließenden Mantelteil 22, an dessen Außenfläche Formschlusselemente zur Verankerung in einer unteren Öffnung der Zahnprothese gebildet sind, und deren Innenwandfläche mit einem zum Schraubgewinde 35 des Zwischenelements 3 komplementären

Innengewinde 23 versehen ist. An das Innengewinde 23 der Innenwandfläche des Mantelteils 22 der Sekundärkrone 2 schließt sich oben über einen radial einwärts springenden Absatz 24 ein kegeliger Wandflächenabschnitt 25 an, der bis zur Innenseite der Deckwand 21 verläuft. Wie aus Figur 1 ersichtlich ist, ist der obere Abschnitt 32 des Zwischenelements 3 durch mit gleichen Umfangsabständen angeordnete axiale Schlitze 36 in eine Mehrzahl von umfangsmäßigen Segmenten 37 unterteilt. Diese Segmente 37 haben an ihrer Innenseite jeweils einen einwärts ragenden Vorsprung 38, der als Rastelement dient. Beim Ausführungsbeispiel ist dieser Vorsprung 38 durch einen in Umfangsrichtung an der Innenwandseite der Segmente 37 verlaufenden Ringsegmentwulst gebildet, der im Axialschnitt einen kreissegmentförmigen Querschnitt hat. Der Vorsprung könnte natürlich auch durch mindestens einen Noppen gebildet sein, aber die ringwulstförmige Gestaltung erscheint als fertigungstechnisch günstigste Gestaltung.

Die Primärkrone 1, die den Implantatpfostenkopf bildet, hat einen Deckwandteil 11 und einen sich daran unten anschließenden Mantelteil 12. Die innenseitigen Formationen der Primärkrone sind im Hinblick auf die Verbindung mit dem übrigen, nicht dargestellten Implantatpfosten und eine aufzunehmende Stoßdämpferfeder ausgebildet und brauchen hier nicht erörtert zu werden.

Die Außenfläche des Mantelteils 12 der Primärkrone 1 hat in ihrem unteren Bereich einen einwärts springenden Absatz 13, der, wie Figur 2 zeigt, mit der unteren Kantenfläche 26 des Mantelteils 22 der Sekundärkrone 2 zusammenwirkt. An diesen Absatz 13 schließt sich nach oben ein Mantelflächenabschnitt 14 an, der zylindrisch verläuft und einem dazu komplementär zylindrisch verlaufenden unteren Innenwandbereich des unteren Abschnitts 31 des Zwischenelements 3 angepaßt ist. Daran schließt sich oben ein weiterer einwärts springender Absatz 15 an, an welchen sich ein oberer Mantelwandabschnitt 16 mit kegeliger Form und einer darin gebildeten Umfangsnut 17 mit im Axialschnitt kreissegmentförmiger Umrissform anschließt.

Die Umfangsnut 17 in der Außenfläche des Mantelteils 12 der Primärkrone 1 dient als Rastelement und wirkt mit dem Vorsprung 38 an jedem Segment 37 des oberen Abschnitts 32 des Zwischenelements 3 rastbar zusammen.

Wie man aus Figur 2 erkennt, haben die Segmente 37 des oberen Abschnitts 32 des Zwischenelements in dem Raum zwischen dem kegeligen Wandflächenabschnitt 25 des Mantelteils 22 der Sekundärkrone und dem oberen kegeligen Mantelwandabschnitt 16 der Primärkrone 1 aufgrund des radialen Abstands dieser Wandbereiche voneinander ausreichend radialen Spielraum, um eine das Einrasten und Ausrasten ermöglichende gewisse radiale Auslenkung der Segmente 37 zu ermöglichen. Weil die Segmente 37 durch die axialen Schlitze 36 voneinander getrennt sind, wird die genannte radiale Auslenkbarkeit ermöglicht, und die Segmente 37 haben dabei aufgrund der materialeigenen Elastizität des Metalls, aus dem das Zwischenelement 3 hergestellt ist, Federeigenschaften.

Zum Gebrauch wird das Zwischenelement 3 in die Sekundärkrone 2 eingeschraubt. Dabei kann die Einschraubbewegung dadurch begrenzt werden, daß die Schulterfläche 34 des Zwischenelements an dem Absatz 24 der Innenwandfläche des Mantelteils 22 der Sekundärkrone 2 anstößt, oder es kann anderweitig ein Anschlag vorgesehen sein, um eine definierte Position des Zwischenelements 3 in der Sekundärkrone 2 zu erhalten, insbesondere ein radial auswärts vorspringender Ringbund am unteren Ende des hülsenförmigen Zwischenelements, der mit einer entsprechenden Gegenfläche einer Umfangsnut oder Abstufung der Sekundärkrone als Anschlag zusammenwirkt. Es kann auch vorgesehen sein, beispielsweise durch irgendwelche Rastmittel im Bereich der Gewindeverbindung, eine gewisse Justierbarkeit der Position des Zwischenelements 3 innerhalb der Sekundärkrone zu erreichen. Die Federelastizität der Segmente 37 des Zwischenelements 3 kann auf mehrfache Weise eingestellt werden, beispielsweise durch Wahl der radialen Dicke der Segmente 37, Anzahl und Breite der axialen Schlitze 36 und damit auch Anzahl und umfangsmäßige Breite der Segmente 37. Hierdurch und durch die Wahl der genauen relativen axialen Position der Vorsprünge 38 der Segmente 37 und der Umfangsnut 17 der Primärkrone 1 sind Straffheit und Vorspannung der Rastverbindung einstellbar. Abweichend von dem beschriebenen Ausführungsbeispiel mit einer Mehrzahl von Segmenten 37 könnte im oberen Abschnitt 32 des Zwischenelements 3 auch nur ein einziges in Umfangsrichtung verlaufenden Segment dadurch gebildet sein, dass dieser obere Bereich durch einen Schlitz axial geschlitzt ist, wobei der Schlitz auch relativ breit sein kann. Auch bei einem derartigen einzigen Segment ist eine radial elastische Auslenkbarkeit gegeben, um die Rastfunktion zu ermöglichen.

Beim Ausführungsbeispiel sind die Rastmittel durch Vorsprünge 38 an jedem Segment 37 und die Umfangsnut 17 in der Primärkrone 1 gebildet. Die Anordnung könnte natürlich auch umgekehrt werden, derart, dass die Primärkrone mit einem Rastvorsprung, beispielsweise in Gestalt eines umlaufenden Wulsts oder in Gestalt von Noppen oder Wulstsegmenten, ausgebildet sein könnte, und die Segmente mit Rastmulden versehen wären.

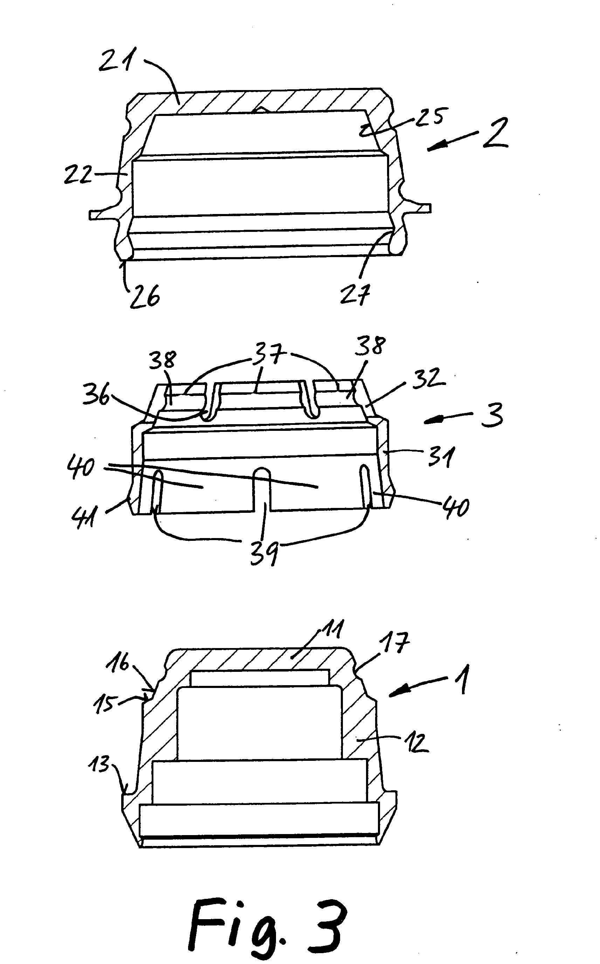

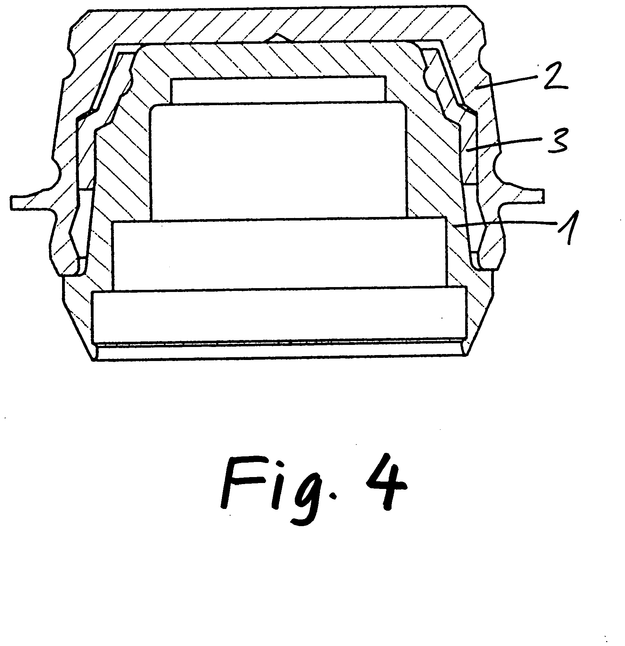

Eine zweite Ausführungsform der erfindungsgemäßen Verbindungsanordnung ist in den Figuren 3 und 4 dargestellt.

Der wesentliche Unterschied zwischen der oben beschriebenen Ausführungsform nach den Figuren 1 und 2 und der Ausführungsform nach den Figuren 3 und 4 besteht in der Verbindung des Zwischenelements 3 mit der Sekundärkrone 2.

Während das Zwischenelement 3 der Ausführungsform nach den Figuren 1 und 2 an seinem unteren Abschnitt 31 außen mit einem Schraubgewinde 35 versehen ist, das mit einem entsprechenden Innengewinde 23 des Mantelteils 22 der Sekundärkrone zusammenwirkt, ist bei der Ausführungsform nach den Figuren 3 und 4 eine Rastverbindung zwischen dem Mantelteil 22 der Sekundärkrone 2 und dem unteren Abschnitt 31 des Zwischenelements 3 vorgesehen. Dazu hat der Mantelteil 22 der Sekundärkrone im unteren Bereich seiner Innenwandfläche eine Ringnut 27, die als Rastöffnung dient, und der leicht konische untere Abschnitt 31 des Zwischenelements 3 ist durch mit Umfangsabständen angeordnete axiale Schlitze 39 in eine Anzahl getrennter umfangsmäßiger Segmente 40 unterteilt, die an ihrer Außenfläche jeweils einen Vorsprung 41 aufweisen, der als Rastelement dient und mit der Ringnut 27 des Mantelteils 22 der Sekundärkrone rastend zusammenwirkt. Der Vorsprung 41 an jedem Segment 40 ist wiederum als Ringsegmentwulst ausgebildet, könnte aber auch die Gestalt mindestens eines Noppens an jedem Segment haben.

Im übrigen entsprechen die Ausbildung der Primärkrone 1, der Sekundärkrone 2 und des Zwischenelements 3 derjenigen der Ausführungsform nach den Figuren 1 und 2 und wird daher nicht noch einmal im einzelnen beschrieben; für gleiche Elemente sind auch die gleichen Bezugszeichen verwendet.

Wie auch bei der Ausführungsform nach den Figuren 1 und 2 haben die Segmente 37 des oberen Abschnitts 32 des Zwischenelements 3 bei der Ausführungsform nach den Figuren 3 und 4, wie Figur 4 zeigt, im zusammengesetzten Zustand der Komponenten zwischen den entsprechenden kegeligen Wandflächenbereichen 25 und 16 der Sekundärkrone und der Primärkrone ausreichend radiales Spiel, um die notwendige federelastische Auslenkung der Segmente 37 zum Einrasten und Ausrasten der Vorsprünge 38 mit der Umfangsnut 17 der Primärkrone 1 zu ermöglichen. Hingegen haben, wenn die Sekundärkrone 2 mit dem eingesetzten Zwischenelement 3 auf die Primärkrone 1 aufgesetzt ist, die Segmente 40 des unteren Abschnitts 31 des Zwischenelements 3 keine radiale Spielmöglichkeit zwischen dem Mantelteil 32 der Sekundärkrone und dem Mantelflächenabschnitt 14 des Mantelteils 12 der Primärkrone 1. Dadurch ist die Rastverbindung des unteren Abschnitts 31 des Zwischenelements 3 mit dem Mantelteil 22 der Sekundärkrone 2 gesichert, wann immer die Sekundärkrone 2 mit dem Zwischenelement 3 auf die Primärkrone 1 aufgesetzt ist, das heißt, es ist ausgeschlossen, daß das Zwischenelement 3 mit den Segmenten 40 seines unteren Abschnitts 31 aus der Ringnut 27 des Mantelteils 22 der Sekundärkrone ausrasten kann, wenn die Sekundärkrone 2 auf die Primärkrone 1 aufgesetzt ist. Damit ist sichergestellt, daß beim Abnehmen der Zahnprothese und damit der Sekundärkrone 2 vom Implantatpfosten, also hier von der Primärkrone 1, ein Ausrasten ausschließlich zwischen den Vorsprüngen 38 der oberen Segmente 37 des Zwischenelements 3 und der Umfangsnut 17 der Primärkrone 1 erfolgt, und nicht etwa die Sekundärkrone 2 sich vom Zwischenelement 3 lösen kann und dieses auf der Primärkrone 1 verbleibt.

Die Abwandlungsmöglichkeiten, die im Zusammenhang mit der Ausführungsform nach den Fig. 1 und 2 angesprochen worden sind, gelten gleichermaßen für die Ausführungsform nach den Fig. 3 und 4. Auch dort kann am oberen Abschnitt und/oder am unteren Abschnitt des Zwischenelements statt mehrerer Segmente nur ein einziges Segment vorgesehen sein, und die Anordnung von Vorsprüngen am einen Teil und von Rastmulden beispielsweise in Gestalt von Umfangsnuten am anderen Teil zur Erzeugung der Rastfunktion ist beliebig austauschbar.

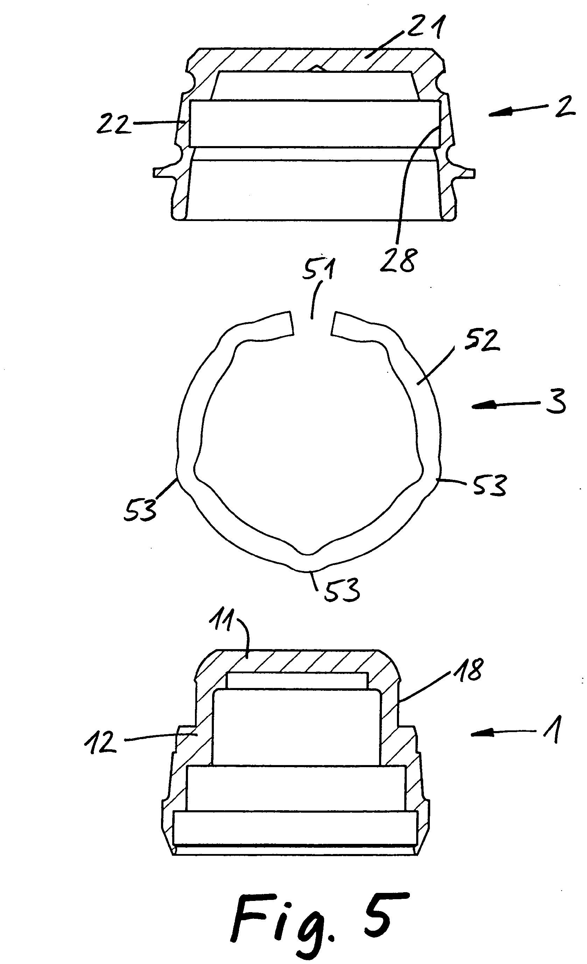

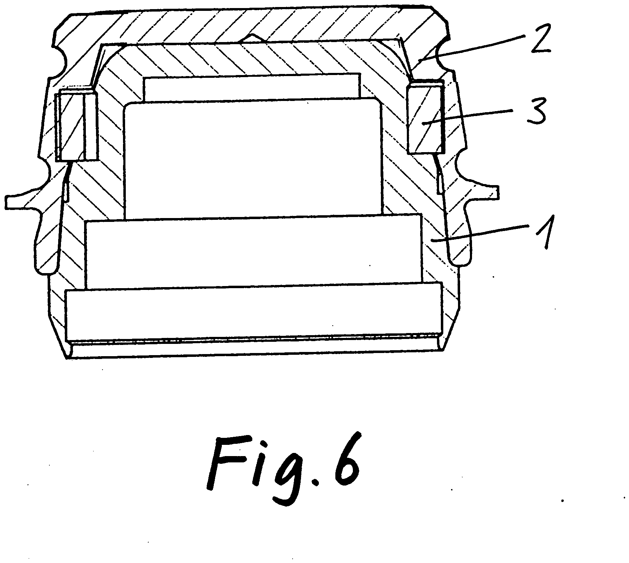

Eine dritte Ausführungsform einer erfindungsgemäßen Verbindungsanordnung ist in den Figuren 5 und 6 dargestellt. Diese Ausführungsform nach den Figuren 5 und 6 unterscheidet sich von den Ausführungsformen nach den Figuren 1 bis 4 dadurch, daß das Zwischenelement 3 nicht als Hülse ausgebildet ist, die mit federnden Elementen (Segmente 37 mit Vorsprüngen 38) mindestens mit der Primärkrone 1 elastisch rastbar zusammenwirkt, sondern als Ringfeder ausgebildet ist, die einerseits mit radial äußeren Bereichen mit der Sekundärkrone 2 in Eingriff steht (was nicht notwendigerweise elastisch rastbar sein muß, wohl aber elastisch rastbar sein kann), und mit radial inneren Bereichen elastisch rastbar mit der Primärkrone 1 zusammenwirkt.

Die das Zwischenelement bei der Ausführungsform nach den Fig. 5 und 6 bildende Ringfeder ist, damit ihre Gestaltung besser erkennbar ist, in Fig. 5 in der Draufsicht dargestellt, während die Primärkrone 1 und die Sekundärkrone 2 im Axialschnitt dargestellt sind.

Die Ringfeder besteht aus einem durch einen Axialschlitz 51 geschlitzten Ringkörper 52, der an mehreren mit gleichen Umfangsabständen beabstandeten Stellen mit kleinen, radial auswärts gewölbten Wellen 53 geformt ist. Diese Wellen 53 bilden radial nach außen vorspringende Bereiche, die, wie aus Fig. 6 ersichtlich ist, in eine Ringnut 28 im oberen Bereich der Innenwandfläche der Sekundärkrone 2 eingreifen. Da die Ringfeder geschlitzt ist, ist sie leicht in die Ringnut 28 der Sekundärkrone 2 einsetzbar.

Zwischen den radial auswärts verlaufenden Wellen 53 bildet der Innenumfangsbereich des Ringkörpers 52 radial innere Bereiche, die, wie ebenfalls aus Fig. 6 ersichtlich ist, rastend mit einer Ringnut 18 der Primärkrone zusammenwirken. Wie aus Fig. 6 auch ersichtlich ist, hat die Ringfeder einen rechteckförmigen Ringquerschnitt. Die obere Nutflankenfläche der Ringnut 18 der Primärkrone 1 ist als schräge Rampenfläche ausgebildet, so dass ein Ausrasten der Ringfeder aus dieser Ringnut ermöglicht wird, und oberhalb der Ringnut 18 hat die Primärkrone 1 auch eine gewölbte oder schräge, also rampenartig wirkende Außenfläche, die ein radiales Spreizen der Ringfeder beim Aufsetzen der Sekundärkrone 2 auf die Primärkrone 1 und dann das Einrasten in die Ringnut 18 ermöglicht.

Abweichend von dem beschriebenen Ausführungsbeispiel der Ringfeder kann auch eine Ringfeder benutzt werden, die einen kreisrunden Ringquerschnitt hat und mit radialen Wellungen geformt sein kann, und die geschlitzt oder nicht geschlitzt sein kann. Auch Querschnittsformen, bei denen nur der radial einwärts weisende Ringquerschnittsteil rund oder ballig geformt ist, sind möglich.

Bei allen beschriebenen Ausführungsformen kann das Zwischenelement 3, wie in der allgemeinen Beschreibung schon erwähnt, aus Nickel-Titan hergestellt sein, das eine "Formgedächtnis"-Eigenschaft hat.

## Patentansprüche

1. Verbindungsanordnung zwischen einer Zahnprothesen-Krone (2) und dem Kopf (1) eines Implantatpfostens,
mit einem Zwischenelement (3), das in einem zwischen der Krone (2) und dem Implantatpfostenkopf (1) gebildeten Zwischenraum angeordnet ist und einerseits mit der Innenwandfläche der Krone (2) formschlüssig zusammenwirkt und andererseits mit einem Rastelement (17) des Implantatpfostenkopfs (1) elastisch rastbar zusammenwirkt,
**dadurch gekennzeichnet, dass**
das Zwischenelement (3) aus einem hinreichend federelastischen Metall gebildet ist, und dass das Zwischenelement (3) in Gestalt einer Hülse mit einem unteren, der Öffnung der Krone (2) zugewandten Abschnitt (31) und einem oberen, der Deckwand (21) der Krone (2) zugewandten Abschnitt (32) ausgebildet ist, wobei der untere Abschnitt (31) eine im wesentlichen zylindrische Form hat und an seinem Außenumfang mit einem Schraubgewinde (35) versehen ist, das mit einem komplimentären Gewinde (23) an der Innenwandfläche der Krone (2) einschraubbar ist,
und wobei der obere Abschnitt (32) durch einen axialen Schlitz zu einem umfangsmäßigen Segment geformt ist oder durch mit Umfangsabständen angeordnete axiale Schlitze (36) in eine Mehrzahl von umfangsmäßigen Segmenten (37) unterteilt ist, wobei das oder jedes Segment etwas radial elastisch auslenkbar ist und an seiner radialen inneren Seite mit einem Rastelement (38) versehen ist, das mit einem am Implantatpfostenkopf (1) gebildeten Rastgegenelement (17) zusammenwirkt.

2. Verbindungsanordnung zwischen einer Zahnprothesen-Krone (2) und dem Kopf (1) eines Implantatpfostens,
mit einem Zwischenelement (3), das in einem zwischen der Krone (2) und dem Implantatpfostenkopf (1) gebildeten Zwischenraum angeordnet ist und
einerseits mit der Innenwandfläche der Krone (2) formschlüssig zusammenwirkt und andererseits mit einem Rastelement (17) des Implantatpfostenkopfs (1) elastisch rastbar zusammenwirkt,
**dadurch gekennzeichnet, dass**
das Zwischenelement (3) aus einem hinreichend federelastischen Metall gebildet ist, und dass das Zwischenelement (3) in Gestalt einer Hülse mit einem unteren, der Öffnung der Primärkrone (2) zugewandten Abschnitt (31) und einem oberen, der Deckwand (21) der Primärkrone (2) zugewandten Abschnitt (32) ausgebildet ist, wobei der untere Abschnitt (31) eine im wesentlichen zylindrische Form hat und durch einen Axialschlitz zu einem umfangsmäßigen Segment geformt ist oder durch umfangsmäßig beabstandete axiale Schlitze (39) in eine Mehrzahl von umfangsmäßigen Segmenten (40) unterteilt ist, und wobei das oder jedes Segment etwas radial elastisch auslenkbar ist und an seiner radial äußeren Seite mit einem Rastelement (41) versehen ist, das mit einem an der Innenwandfläche der Krone (2) gebildeten Rastgegenelement (27) zusammenwirkt,
und wobei der obere Abschnitt (32) durch einen axialen Schlitz zu einem umfangsmäßigen Segment geformt ist oder durch mit Umfangsabständen angeordnete axiale Schlitze (36) in eine Mehrzahl von umfangsmäßigen Segmenten (37) unterteilt ist, wobei das oder jedes Segment etwas radial elastisch auslenkbar ist und an seiner radialen inneren Seite mit einem Rastelement (38) versehen ist, das mit einem am Implantatpfostenkopf (1) gebildeten Rastgegenelement (17) zusammenwirkt.

3. Verbindungsanordnung zwischen einer Zahnprothesen-Krone (2) und dem Kopf (1) eines Implantatpfostens,
mit einem Zwischenelement (3), das in einem zwischen der Krone (2) und dem Implantatpfostenkopf (1) gebildeten Zwischenraum angeordnet ist und einerseits mit der Innenwandfläche der Krone (2) formschlüssig zusammenwirkt und andererseits mit Implantatpfostenkopfs (1) elastisch rastbar zusammenwirkt,
**dadurch gekennzeichnet, dass**
das Zwischenelement (3) aus einem hinreichend federelastischen Metall gebildet ist, und dass das Zwischenelement (3) als Ringfeder ausgebildet ist,
die radial äußere Bereiche (53) aufweist, die als Eingriffselemente mit in einem oberen Bereich der Innenwandfläche der Krone (2) darin gebildeten Aufnahmeelementen (28) zusammenwirken, und die radial innere Bereiche aufweist, die als Rastelemente mit einem an dem Implantatpfostenkopf gebildeten Rastgegenelement (18) zusammenwirkt.

4. Verbindungsanordnung nach Anspruch 1 oder 2, wobei das Rastelement (38) jedes Segments (37) des oberen Abschnitts (32) des hülsenförmigen Zwischenelements (3) durch einen Vorsprung gebildet ist, der mit einer als Rastmulde dienenden und das jeweilige Rastgegenelement bildenden Ringnut (17) am Implantatpfostenkopf zusammenwirkt.

5. Verbindungsanordnung nach Anspruch 2, wobei das Rastelement (41) jedes Segments (40) des unteren Abschnitts (31) des hülsenförmigen Zwischenelements (3) durch einen Vorsprung gebildet ist, die mit einer als Rastmulde dienenden und das jeweilige Rastgegenelement bildenden Ringnut (27) in der Innenwandfläche der Krone (2) zusammenwirkt.

6. Verbindungsanordnung nach Anspruch 1 oder 2 oder nach Anspruch 4 oder 5, wobei der obere Abschnitt (31) des hülsenförmigen Zwischenelements (3) eine sich nach oben verjüngende kegelstumpfförmige Gestalt hat.

7. Verbindungsanordnung nach Anspruch 6, wobei der kegelstumpfförmige obere Abschnitt (32) mit dem im wesentlichen zylindrischen unteren Abschnitt (31) des hülsenförmigen Zwischenelements durch einen radial einwärts springenden Absatz (33) verbunden ist, der eine außenseitige, axial nach oben weisende Schulterfläche (34) bildet, die mit einer komplementären Schulterfläche eines radial einwärts springenden Absatzes (24) der Innenwandfläche der Krone (2) als Anschlag zusammenwirkt.

8. Verbindungsanordnung nach Anspruch 3, wobei die Ringfeder einen durch einen axialen Schlitz (51) geschlitzten Ringkörper (52) aufweist, der entlang seines Umfangs eine Mehrzahl radial auswärts ragender Vorsprünge oder Ausbuchtungen (53) aufweist.

9. Verbindungsanordnung nach Anspruch 8, wobei der Ringkörper (52) einen rechteckigen Ringquerschnitt hat und das am Implantatpfostenkopf gebildete Rastgegenelement (18) eine Ringnut ist, deren obere Nutflankenfläche als schräge Rampenfläche ausgebildet ist, und wobei der Implantatpfostenkopf oberhalb der Ringnut eine ebenfalls schräge Rampenfläche aufweist, die nach oben konvergiert.

10. Verbindungsanordnung nach Anspruch 3, wobei die Ringfeder als geschlitzte oder nicht geschlitzte, entlang ihres Umfangs in radialer Richtung wellenförmig verlaufend ausgebildet ist, wobei die äußeren Wellenbereiche die Eingriffselemente und die inneren Wellenbereiche die Rastelemente bilden.

11. Verbindungsanordnung nach einem der Ansprüche 1 bis 10, wobei das Zwischenelement (3) aus Nickel-Titan-Material mit "Formgedächtnis"-Eigenschaften hergestellt ist.
